# EUROPEAN PATENT APPLICATION

(11) **EP 0 792 611 A1**
(43) Date of publication of application: **03.09.1997**
(21) Application number: 97830023.4
(22) Date of filing: 28.01.1997
(51) Int. Cl.: A47J 47/20

(54) **Moulded plastic vegetable cleaning tray used on sinks of different widths**

(30) Priority: 28.02.1996 IT MC960009 U
(71) Applicant: Tontarelli, Sergio, I-60022 Castelfidardo (AN) (IT)
(72) Inventor: Tontarelli, Sergio, I-60022 Castelfidardo (AN) (IT)
(74) Representative: Baldi, Claudio

(57) **Abstract**

This invention concerns a moulded plastic tray for cleaning vegetables characterised by a bowl (2) with holes (2a) as well as a cutting board (T) and a basin (C) for collecting soil and scraps, both being removable and placed at the top of said bowl; said tray has a handle (8) pivoted eccentrically with respect to the external walls of the bowl (2) which fits precisely under the perimeter edge (3) of the tray according to the invention when it is not used but which may be overturned outwards to increase the length of the resting base of the tray when it is necessary to place the same on a sink basin whole length is greater than that of the tray according to the invention.

## Description

This patent application for a utility model concerns a moulded plastic tray for cleaning vegetables used on sinks of different widths.

Cleaning vegetables may sometimes be difficult in view of the fact that certain types of vegetables have leaves and roots which are covered with soil.

To avoid soiling the sink basin, special single block moulded plastic trays are available on the market which rest on the edge of the sink and are used to clean the vegetables.

Generally trays of this type have a working surface on which the vegetables can be placed or cut, adjacent to the actual bowl and provided with a regular series of holes on the bottom in which the vegetables are washed; it is provided in particular that when the tray rests on the edge of the sink, its bowl is positioned precisely above the sink basin. Moreover, the bowl of a tray of this kind also acts as a sieve in that the water used for washing the vegetables drains through the bottom with holes into the underlying sink basin while the soil and other solid residues remain in the tray itself, thanks to the reduced cross-section of the holes on the bottom of the same.

The solid residue can therefore be emptied into a dustbin thus preventing the same from flowing into the drain pipe of the sink.

Recently a more sophisticated version of these trays was introduced having a rectangular shape with short rounded sides and a basin whose bottom is generally slotted for draining away the water.

This version is characterised at the top of its sides by a perimeter step designed to house a removable working top on which to cut the vegetables as well as a removable shaped bowl for catching soil and vegetable scraps.

Once the vegetables have been cleaned, the bowl can be removed from the tray and emptied into a dustbin while the working top may be removed after allowing the clean vegetables to fall into the basin having a bottom with holes for rinsing.

In addition, this particular version of the tray in question is provided with a box-shaped perimeter edge terminating with a downward facing side wall; said edge being provided with two identical and symmetrical slits in proximity of the two curved transverse sides which act as a gripping handle. Two slide shaped notches are provided towards the interior of the bowl at the same level as these two slits.

Each of said notches is designed to facilitate the removal of the vegetable cutting board; moreover said notches together with the relevant slits on the transverse edges of the tray also precisely house the handle of the bowl in which soil and vegetable scraps are collected.

Said notches are also provided at the two ends of the tray to allow the user to place the bowl on either side.

Although these vegetable cleaning trays are very practical, they have a disadvantage in that the same cannot be used on sinks with basin having a width greater then the length of the trays.

In fact, in order to place a similar tray into the correct working position above the sink basin, it is necessary to rest the curved transverse edges at the top of both side walls of the sink basin; this can obviously not be done in the case mentioned above.

Positioning a tray of this kind is moreover rather unstable even when the width of the sink basin is slightly less than its length; in this case in fact the transverse edges of this tray would slightly overlap the walls of the sink basin so that the tray could easily fall into the sink should it accidentally slide.

The purpose of this invention is to make a vegetable cleaning tray which maintains the same structure but with the advantage of adapting itself to different types of sinks whose dimensions are greater than the length of the tray according to the invention.

The tray according to the invention also has the advantage of resting securely even on sink basins whose width is slightly inferior to its length.

The main characteristic of the new tray in question is the provision of a large "U" shaped handle having two rectilinear arms and a curved traverse element, housed precisely in the space between the walls of the bowl and the vertical downward facing edge of a box-shaped perimeter edge encompassing the bowl.

In fact the rectilinear parallel arms of said handle are housed below the longitudinal sides of said box-shaped perimeter edge while the curved traverse element of said handle is housed precisely below one of the two curved transverse sides of the box-shaped perimeter edge.

The length of the rectilinear arms of the handle is equal approximately to two thirds of the length of the bowl and in fact each of these is pivoted in an intermediate position between the external walls of the bowl and the vertical side wall of the box-shaped edge, to a pair of holes having a horizontal axis made at about two thirds of the length of the bowl.

This feature obviously allows the handle, when the same is not used, to be housed and concealed inside its housing below the box-shaped perimeter edge of the tray.

However, when the handle is rotated 180° in order to move the rounded traverse element from one end to the other end of the tray, the eccentric position of its pivoting point places the traverse element in a projecting position with respect to the transverse edge of the tray.

In this projecting position, said traverse element may be used as a resting point for the tray on the edges of the sink; in other words, the tray will rest at the top of the sink on one side with one of its curved transverse edges and on the other side with the curved traverse element of the handle in withdrawn position.

Thanks to this particular positioning of the handle, it is therefore possible to place the tray in question even on sinks whose width is slightly less or even greater than the length of the tray.

For major clarity the description of the invention continues with reference to the enclosed drawings which are intended for purposes of illustration and not in a limiting sense, whereby:

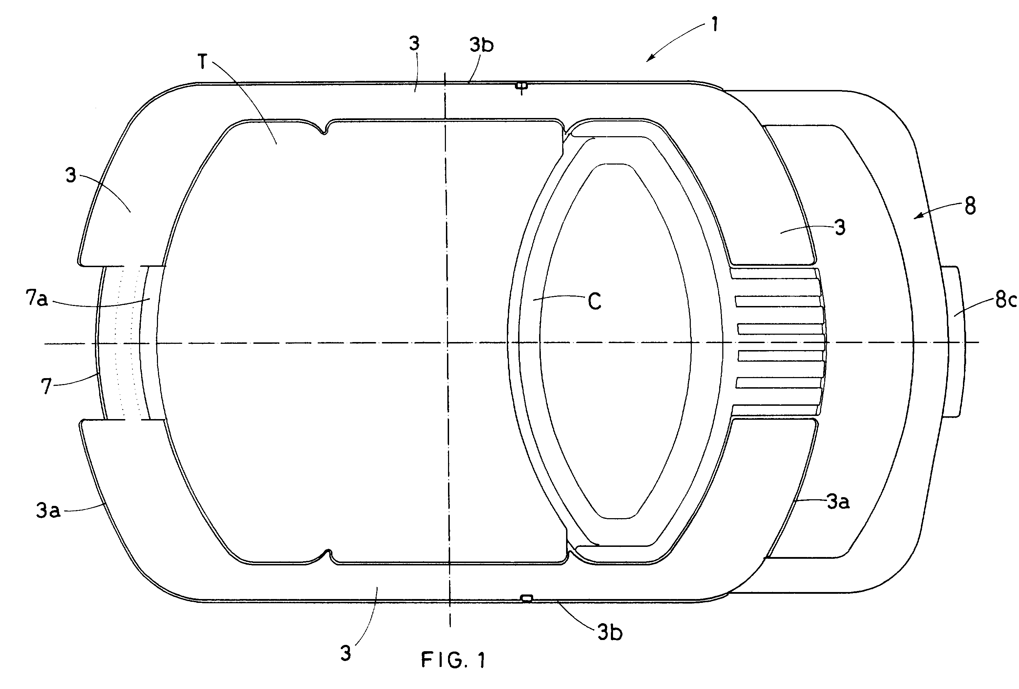

- figure 1 is a top view of the tray according to the invention with the handle in a working position;

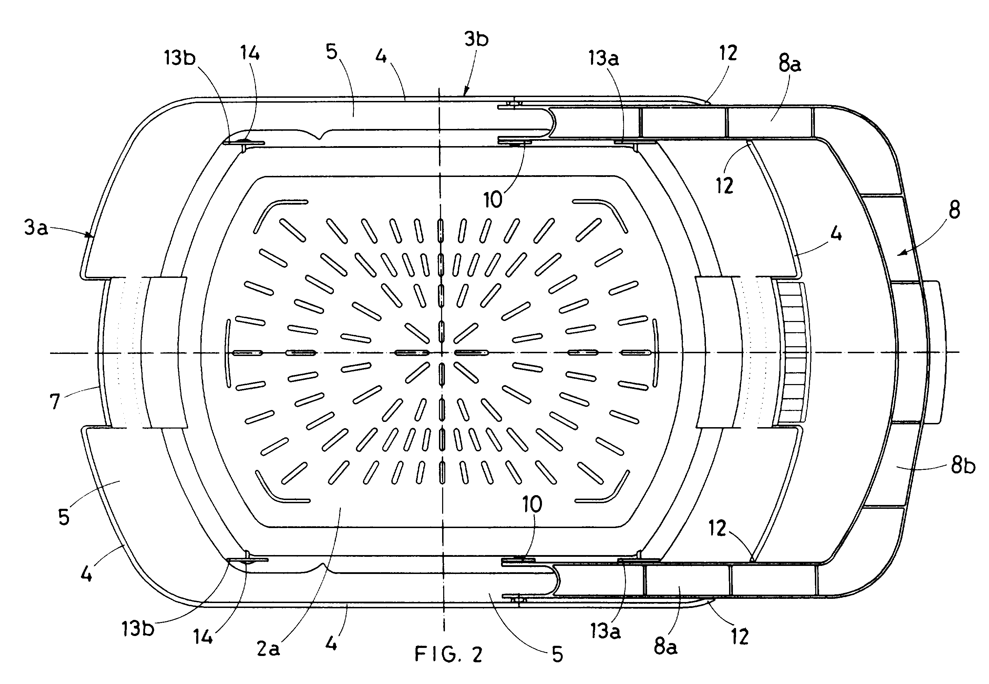

- figure 2 is a bottom view of the tray according to the invention with the handle in a working position;

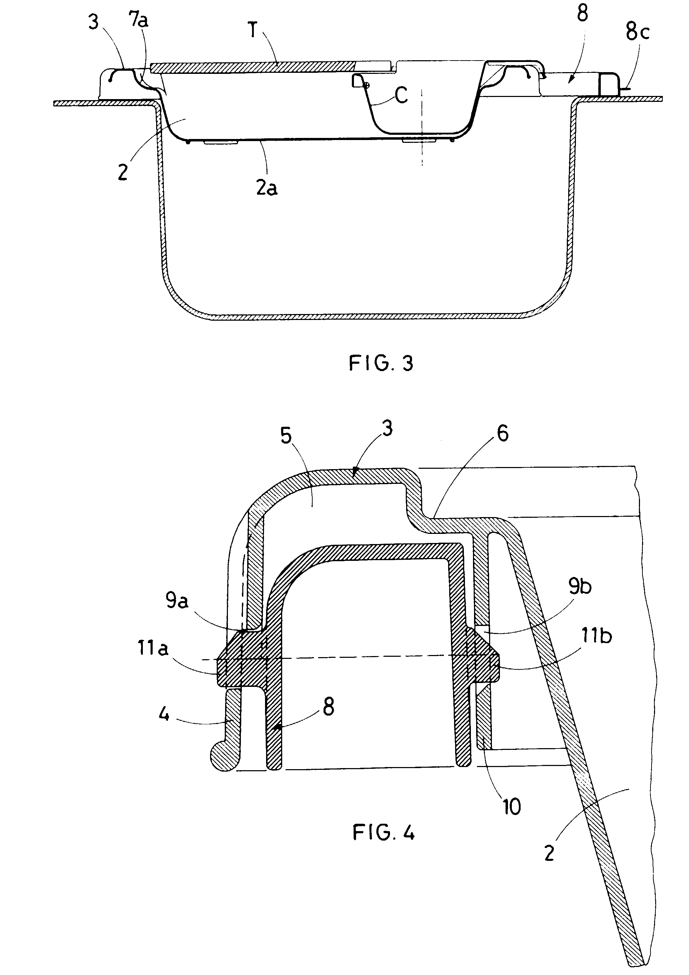

- figure 3 is a cross-section on a longitudinal plane of the tray according to the invention with the handle tipped into its projecting position, with a view over the cross-section of a sink basin;
- figure 4 is a transverse section of the pivoting point of the handle with respect to the tray in question.

With reference to the enclosed figures, the tray according to the invention consists of a tray (1) having an approximately rectangular plane provided with a bowl (2) having a bottom with holes (2a) and a box-shaped perimeter edge (3) terminating with a vertical side wall (4) forming a perimeter area (5) between said side wall (4) and the external face of the bowl (2) walls.

The transverse sides (3a) of the perimeter edge (3) are curved and are connected to the perfectly rectilinear longitudinal sides (3b).

The top of said bowl (2) is generally provided with a perimeter step (6) on which to rest a cutting board (T) and the basin (C) for collecting scraps.

The centre of each rounded transverse side (3a) of the perimeter edge (3) is provided with a slit (7) at the same level, towards the interior of the bowl (2), as a slanted slide shaped notch (7a).

The tray in question is characterised in that at the sides of the bowl (2), and in an eccentric position, there are two pivoting points for the arms (8a) of a handle (8) sized and structured so that the same is housed precisely in the perimeter area (5) encompassing the bowl (2).

The handle is in fact provided with two rectilinear arms (8a) and a traverse element (8b), having exactly the same profile as the transverse sides (3a) of the perimeter box-shaped edge (3) of the tray in question (1).

In particular, each of said pivoting points of the handle (8) consists in fact of an opposing pair of holes having horizontal axis (9a and 9b), one (9a) made on the vertical perimeter side wall (4) and the other (9b) on a bracket (10) especially provided on the exterior of bowl (2).

Each pair of holes (9a and 9b) houses a spring fitting pair of pins having horizontal axis (11a and 11b) provided at the end of each of the arms (8a) of handle (8).

As previously described, said handle (8) can be rotated 180° around said pivoting points so that it moves from its rest position fully housed in the perimeter area (5) to its working position in which the traverse element (8b) of the handle (8) is in a projecting position with respect to the tray.

Moreover, it should be noted that the handle (8) can be tipped into a working position thanks to the presence of two slits (12) on the transverse side (3a) of the box-shaped edge (3) towards which the two pivoting points of the handle (8) are dencetralised; said slits (12) in fact being characterised by a width which allows the precise housing of the rectilinear arms (8a) of the handle (8) when the latter has completed its rotation of 180° towards the exterior of the tray (1).

In order to fix the handle (8) in both rest and working positions, the bottom of the box-shaped perimeter edge (5) of tray (1) is provided with two pairs of tabs (13a and 13b) projecting downwards, the same being symmetric to the longitudinal axis of the tray (1).

Each of said tabs (13a and 13b) is provided with a small semi-spheric protuberance (14) on the exterior face of the base. In particular, the first pair of tabs (13a) is positioned slightly inwards with respect to slits (12) made on one of the curved sides (3a) of the box-shaped edge (3) while the second pair (13b) is positioned towards the opposing side (3a) at the level of the connection points between the longitudinal walls and the transverse wall of the bowl.

These tabs (13a and 13b) interfere with the arms (8a) of the handle (8) whenever the same - being overturned completely by 180° - moves from rest to working position or vice versa. More precisely, said interference causes the spring housing of said semi-spheric protuberances (14) into semi-spheric impressions (not shown in the enclosed figures) made for this purpose on the interior face of the arms (8a) of the handle (8).

When the handle (8) is moved to a rest position, the protuberances (14) of the tabs (13b) are housed into the semi-spheric impressions on the arms (8a) of the handle (8) in a position which is closer to the traverse element (8b); when, on the other hand, the handle (8) is moved into a working position, the protuberances (14) of the tabs (18a) are spring housed into the semi-spheric impressions on the arms of the handle (8) in a position which is close to the respective free ends.

It should be noted that the coupling of the semi-spheric protuberances (14) and the above holes occurs thanks to the natural elastic yielding of the tabs (13a and 13b).

Finally, attention is drawn to the fact that the centre of the rounded traverse element (8b) of the handle (8) is provided with a projecting lip (8c) which, when the handle (8) is in its rest position, is precisely housed in the notch (7) at the centre of the transverse side (3a) of the box-shaped edge (3) and acts as a holding point for the removal of handle (8) from its respective housing (5) in order to start the rotation towards a working position.

## Claims

1. A moulded plastic vegetable cleaning tray used on sinks of different widths of the type consisting of a bowl (2) having a bottom with holes (2a) encompassed by a rounded box-shaped perimeter edge (3) in proximity of the transverse sides (3a) and terminating with a vertical side wall (4) which - in cooperation with the side walls of the bowl (2) - forms a perimeter area (5), as well as a cutting board (T) and a basin (C) resting on a perimeter step (6) provided at the top of the bowl (2) characterised by a overturning handle (8) consisting of a curved traverse element (8b) which can be housed in the section of the area (5) under the rounded transverse side (3a) of the box-shaped perimeter edge (3) and by two rectilinear arms (8a) housed in the area (5) at the sides of the bowl (2) where said arms (3a) are pivoted eccentrically thanks to respective pairs of pins having horizontal axis (11a and 11b) provided at their ends and which house into respective opposing pairs of holes having horizontal axis (9a and 9b) made on the body of tray (1), one of which (9a) is made directly on the vertical perimeter side wall (4) while the other (9b) is made on a special bracket (10) on the exterior of the bowl (2); two slits (12) being provided in proximity of the transverse side (3a) of the box-shaped edge (3) towards which the two pivoting points of the handle (8) are decentralised, in addition to means for spring fixing the handle (8) both when the same is completely housed in the perimeter area (5) and when the same is rotated by 180° towards the exterior.

2. A moulded plastic vegetable cleaning tray used on sinks of different widths characterised, in a preferred embodiment, in that the above fixing means of the handle (8) consist of two opposing pairs of tabs (13a and 13b) projecting downwards under the tray (1) and provided at the end of the external face with respective semi-spheric protuberances (14), of which the first pair (13a) is positioned in a slightly interior position with respect to the slits (12) made on one of the curved sides (3a) of the box-shaped edge (3) and the second pair (13b) is positioned towards the curved opposing side (3a) at the level of the connection points between the longitudinal walls and the transverse wall of the bowl (2); it being provided that said pair of tabs (13a and 13b), which yield elastically, interfere with the arms (8a) of the handle (8) along which there are two pairs of semi-spheric impressions which spring house said semi-spheric protuberances (14).
